(19) **Europäisches Patentamt European Patent Office Office européen des brevets**

(11) **EP 1 897 704 A1**

(12) **EUROPEAN PATENT APPLICATION**
published in accordance with Art. 153(4) EPC

(43) Date of publication:
**12.03.2008 Bulletin 2008/11**

(51) Int Cl.:
**B60C 15/04** (2006.01)   **B21D 53/36** (2006.01)

(21) Application number: **06767413.5**

(22) Date of filing: **27.06.2006**

(86) International application number:
**PCT/JP2006/312796**

(87) International publication number:
**WO 2007/000992 (04.01.2007 Gazette 2007/01)**

(84) Designated Contracting States:
**DE FR GB IT**

(30) Priority: **28.06.2005 JP 2005188617**
**29.05.2006 JP 2006148768**

(71) Applicants:
• **Sumitomo (Sei) Steel Wire Corp.**
**Itama-shi, Hyogo 664-0016 (JP)**
• **Sumitomo Electric**
**Tochigi Co. Ltd.**
**Utsunomiya-shi**
**Tochigi 3213231 (JP)**

(72) Inventors:
• **OKAMOTO, Kenichi**
**Itami Works of**
**Itami-shi, Hyogo 664-0016 (JP)**

• **SASABE, Hiroshi**
**Sumitomo Elec. Tochigi Co. Ltd.**
**Utsunomiya-shi, Tochigi 321-3231 (JP)**
• **WAKAHARA, Hitoshi**
**Sumitomo Elec. Tochigi Co. Ltd.**
**Utsunomiya-shi, Tochigi 321-3231 (JP)**
• **SANO, Yuichi**
**Sumitomo Electric Tochigi Co. Ltd.**
**Utsunomiya-shi, Tochigi 321-3231 (JP)**

(74) Representative: **Cross, Rupert Edward Blount**
**Boult Wade Tennant**
**Verulam Gardens**
**70 Gray's Inn Road**
**London WC1X 8BT (GB)**

(54) **CONNECTING MEMBER OF LATERAL-LINE WIRE IN BEAD CORD**

(57)    An object of the present invention is to prevent shifting of a connector for a wrap wire, reduced strength of the connector, and deterioration in balance, and to make it possible to easily connect the ends of the wrap wire.

The connector is formed by pressing the ends of a columnar metallic member inwardly with punches to define a central thick portion 11 as a partition, and recessed sleeves 12 at both ends of the thick portion 11 into which leading and trailing ends 51 of the wrap wire 50 are inserted. The axial length (1) of the central thick portion 11 and the diameter (d) of the wrap wire satisfies the relation: diameter (d) of the wrap wire $\leq$ axial length (1) $\leq$ 8 x diameter (d) of the wrap wire. The wrap wire 50 is cut so that the distance between the leading and trailing ends 51 of the wrap wire 50 is shorter than the axial length of the thick portion 11. Thus, when the leading and trailing ends 51 of the wrap wire 50 are inserted into the sleeves 12, the ends 51 abut the thick portion 11 without any gap therebetween.

Fig.4

## Description

Technical field

The present invention relates to a bead cord adapted to be embedded in the bead of a pneumatic vehicle tire to reinforce the bead, a connector for inseparably connecting the ends of a wrap wire together after the wrap wire has been helically wrapped around an annular core to form the bead cord, a method of connecting the ends of the wrap wire using such a connector, and a method of manufacturing the connector.

Background of the invention

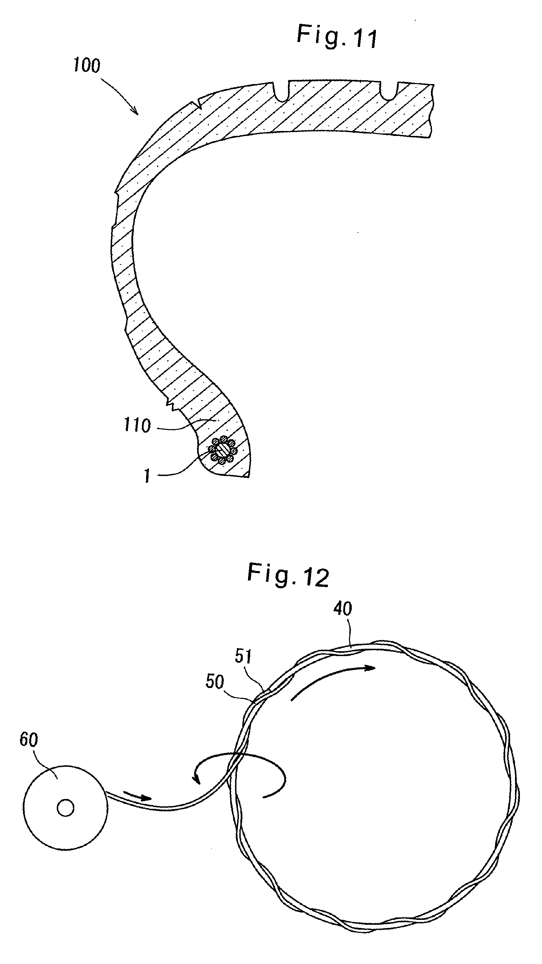

As shown in Fig. 11, a bead cord 1 is embedded in a bead 110 of a tire 100. The bead cord 1 comprises an annular core 40 and a wrap wire 50 helically wrapped around the annular core 40. As shown in Fig. 12, the wrap wire 50 is helically wrapped around the annular core 40 by turning a bobbin 60 on which the wrap wire 50 is wound about the axis of the wire forming the annular core while circumferentially rotating the annular core 40.

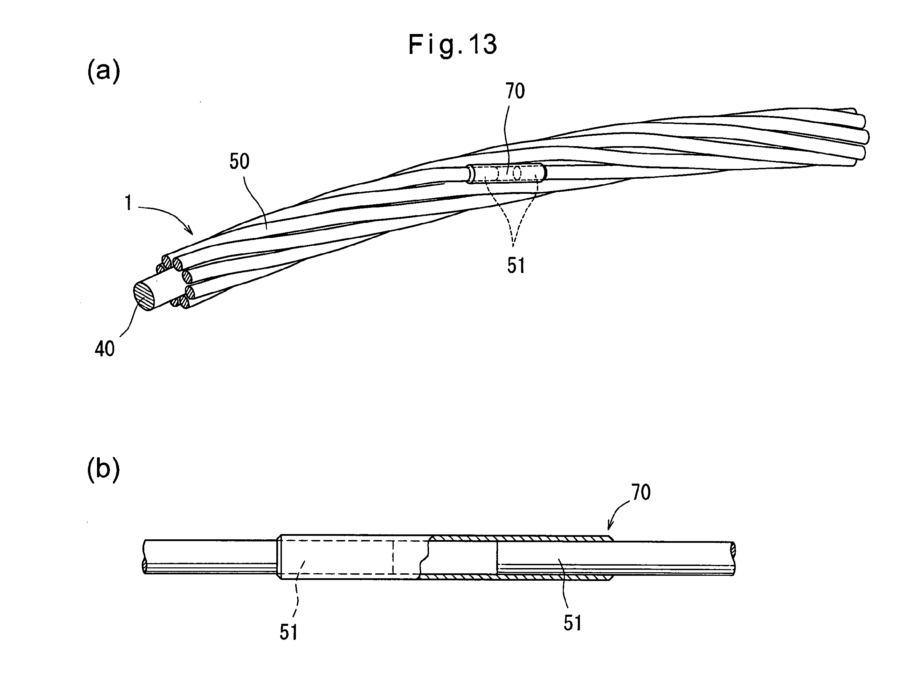

The wrap wire 50 is cut every time the wrap wire 50 is wound around the core to form one layer, and as shown in Fig. 13, the leading and trailing ends 51 of the thus cut wrap wire 50 are connected together by inserting the ends 51 into a sleeve type connector 70 to prevent loosening of the ends 51.

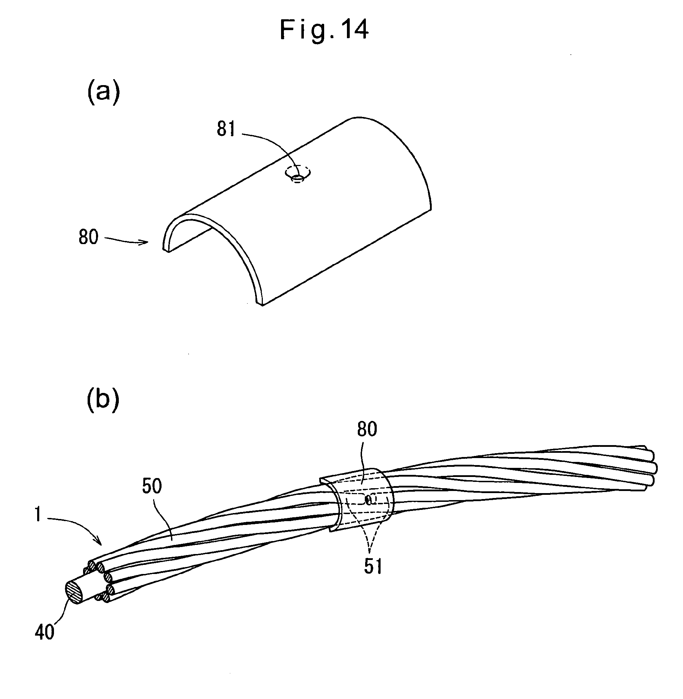

Fig. 14 shows a different type of conventional connector 80, which is a semicylindrical member that covers a layer of the wrap wire 50 wrapped around the annular core 40. The semicylindrical connector 80 includes a radially inwardly extending protrusion 81 adapted to engage between the leading and trailing ends 51 of the wrap wire 50.

The sleeve type connector 70 is disclosed in Patent document 1 and the semicylindrical connector 80 shown in Fig. 14 is disclosed in Patent document 2.
Patent document 1: JP patent publication 50-122581A
Patent document 2: JP patent publication 56-51104B

Disclosure of the invention

Problems to which the invention seeks a solution

Because such a bead cord 1 is embedded in a bead 110 of a tire 100, loads repeatedly act thereon.
Thus, if the sleeve type connector 70 is used, no matter how strictly the dimensional accuracy of the connector 70 is controlled, due e.g. to tolerances in diameter of the wrap wire 50 inserted into the connector, gaps tend to form between the connector and the leading and trailing ends 51 of the wrap wire 50. The gaps allow the connector to repeatedly shift back and forth along the wrap wire 50, which will in turn cause wear of the connector 70, thus resulting in weakening of the connector 70, bending of the connector 70, or separation of the leading or trailing end 51 of the wrap wire 50 from the connector 70. Once the leading or trailing end 51 of the wrap wire 50 separates from the connector, it will move in the tire, thus detrimentally influencing the performance of the tire itself.

In order to prevent shifting of the sleeve type connector 70, after the wrap wire 50 has been inserted into the connector 70, the connector 70 may be caulked to more securely join the connector 70 to the wrap wire 50.

But if bending stress acts on the wrap wire 50, such stress tends to concentrate on the central portion of the sleeve type connector 70, so that the connector 70 tends to break at its central portion. If the connector 70 is caulked, stress especially tends to concentrate on the caulked portions, thus increasing the possibility of breakage of the connector at the caulked portions.

Moreover, caulking adds to the manufacturing steps of the cord, thus increasing its manufacturing cost.

It may be feasible to bond the connector 70 to the wrap wire 50 inserted therein by means of an adhesive to prevent shifting of the sleeve type connector 70. But the use of adhesive also increases the manufacturing steps of the bead cord and thus its manufacturing cost.

In an arrangement in which a layer of the wrap wire 50 is covered with the semicylindrical connector 80, the mass of the semicylindrical connector 80 tends to detrimentally affect the weight balance of the entire tire.

An object of the present invention is to solve the problem of shifting of the connector relative to the wrap wire, the problem of reduced strength of the connector, the problem of detrimental influence on the weight balance of the tire, and the problem of difficulty in connecting the ends of the wrap wire.

Means to achieve the object

In order to achieve this object, the connector according to the present invention comprises a central thick portion, and sleeves provided at both ends of the thick portion into which leading and trailing ends of a wrap wire are adapted to be inserted, respectively.
The thick portion refers to a portion having a large thickness as a stopper which the leading and trailing ends of the wrap wire are adapted to abut. It may be a solid partition or a thick tubular portion.

Advantages of the invention

According to the present invention, by inserting the leading and trailing ends of the wrap wire into the sleeves at both ends of the connector, the ends of the wrap wire can be easily connected together.

Because the leading and trailing ends of the wrap wire are pressed against the central thick portion, they minimize shifting of the connector, thereby minimizing wear of the sleeve, which in turn prevents a reduction in strength of the connector and also prevents separation of the leading and trailing ends of the wrap wire from the connector.

Since the thick portion is provided at the central portion of the connector, the connector according to the present invention is resistant to bending stresses.

Because the sleeves are provided at both ends of the central thick portion, the connector according to the present invention is well balanced in weight.

Brief description of the drawings

Fig. 1(a) is a perspective view a connector embodying the invention;

Fig. 1(b) is a sectional view thereof;

Fig. 2 is a perspective view of a columnar member;

Figs. 3(a) to 3(c) show how the connector is manufactured;

Fig. 4(a) shows how the ends of a wrap wire is connected together by the connector of the present invention;

Fig. 4(b) is an enlarged view of Fig. 4(a);

Fig. 5(a) is a perspective view of a different connector embodying the present invention;

Fig. 5(b) is a sectional view thereof;

Fig. 6 is a perspective view of a tubular member;

Figs. 7(a) to 7(c) show how the connector of Fig. 5 (a) is manufactured;

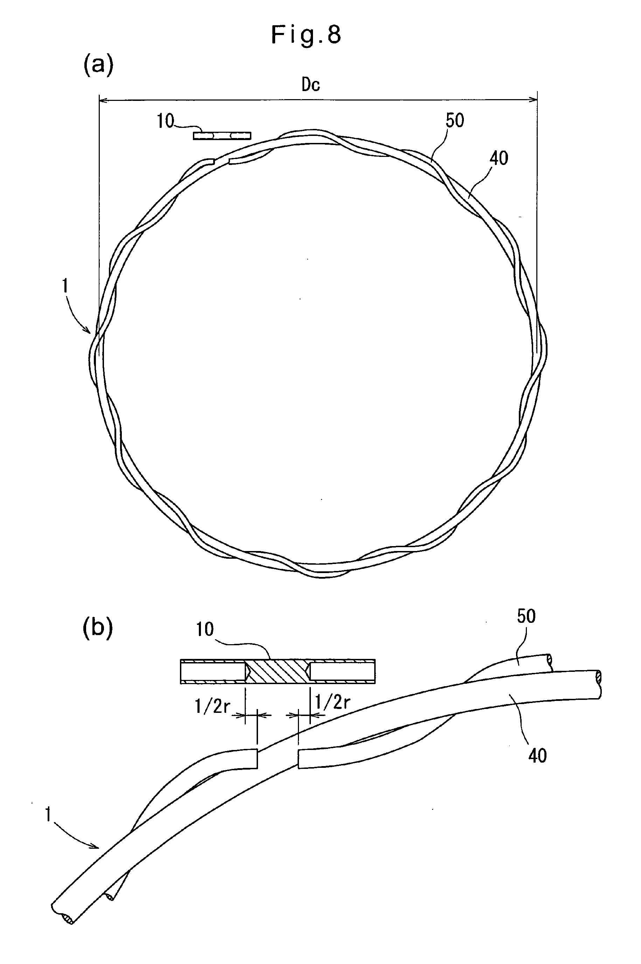

Figs. 8(a) and 8(b) show various dimensions of the cut wrap wire relative to other elements;

Fig. 9(a) is a sectional view of a still different connector embodying the present invention;

Figs. 9(b) and 9(c) show how the ends of a wrap wire are connected together using the connector of Fig. 9(a);

Fig. 10(a) is a perspective view of a yet different connector embodying the present invention;

Fig. 10(b) shows how the ends of a wrap wire are connected together using the connector of Fig. 10(a);

Fig. 10(c) is a sectional view taken along line XIIc-XIIc of Fig. 10(b);

Fig. 11 is a partial sectional view of a vehicle tire;

Fig. 12 shows how a bead cord is manufactured;

Fig. 13(a) shows how the ends of a wrap wire of a bead cord are connected together by means of a conventional sleeve type connector;

Fig. 13(b) is an enlarged view thereof;

Fig. 14(a) is a perspective view of a conventional semicylindrical connector; and

Fig. 14(b) shows how the ends of a wrap wire of a bead cord are connected together by means of the connector of Fig. 14(a).

Description of reference numerals

1.     Bead cord

10.    Connector
11.    Thick portion
12.    Sleeve
13.    Groove
14.    Through hole
20.    Columnar member
21.    Tubular member
30.    Punch
40.    Annular core
50.    Wrap wire
51.    Ends of the wrap wire
60.    Bobbin
70.    Conventional connector
80.    Another conventional connector
81.    Protrusion
100.   Tire
110.   Bead

Best mode for embodying the invention

The connector according to the present invention comprises a central thick portion, and sleeves provided at both ends of the thick portion into which the leading and trailing ends of a wrap wire is adapted to be inserted. The sleeves may be formed by recessing both ends of a columnar member toward its center to define the thick portion at its center as a partition.

The connector according to the present invention may be formed by cutting or pressing a columnar or tubular member made of a metal such as iron, brass or aluminum. Alternatively, the connector may be integrally formed by resin molding.

By pressing a metallic columnar or tubular member from both ends thereof with punches to define the recessed sleeves, the sleeves are pressed to a higher degree than the central portion, so that the sleeves have higher hardness than the central portion. The sleeves can thus maintain sufficient strength with a minimum thickness. This in turn makes it possible to minimize the radial protrusion of the sleeves from the wrap wire when the leading and trailing ends of the wrap wire are inserted into the sleeves, thus eliminating the need to taper the outer surfaces of the sleeves at their ends. Thus, the connector having a thick portion as a partition or a tubular thick portion as a stopper at its central portion can be manufactured at a low cost.

Bending stress applied to the connector is proportional to the square of the diameter (d) of the wrap wire. But if the axial length (1) of the central thick portion is approximately as large as the diameter of the wrap wire, the connector will never be bent significantly or broken. Conversely, if the axial length (1) of the central thick portion is too large, the connector cannot be disposed so as to be in juxtaposition with the wrap wire because the wrap wire is helically wrapped around the annular core. Thus, preferably, the central thick portion has an axial length that is not more than about 8 times the diameter of the wrap wire.

In particular, the axial length (1) of the central thick portion and the diameter (d) of the wrap wire preferably satisfies the relation:

diameter (d) of the wrap wire ≤ axial length (1) ≤ 8 x diameter (d) of the wrap wire.

If the leading and trailing ends of the wrap wire abut the thick portion of the connector without any gaps therebetween when they are inserted into the sleeves, it is possible to prevent shifting of the connector.

For this purpose, however, because it is difficult to cut the wrap wire so that the distance between the leading and trailing ends of the wrap wire is exactly equal to the axial length of the thick portion, the wrap wire is preferably cut to such a length that the distance between the leading and trailing ends is slightly shorter than the axial length of the thick portion. With this arrangement, the leading and trailing ends of the wrap wire are pressed against the central thick portion of the connector with no gaps present therebetween simply by inserting the leading and trailing ends of the wrap wire into the sleeves.

But if the wrap wire is cut to such a length the distance between its leading and trailing ends is too short, the wrap wire tends to partially separate from the annular core, thus detrimentally affecting the performance of the tire.

Thus, preferably, the wrap wire is cut to such a length that the distance between the leading and trailing ends of the wrap wire is equal to or shorter than the axial length of the thick portion and the difference therebetween is between 0 to 1.1% of the circumferential length of the circle defined by the annular core, before the leading and trailing ends of the wrap wire are inserted into the sleeves.

With this arrangement, because the leading and trailing ends of the wrap wire can be inserted into the sleeves without any gap between them and the thick portion, bending stress applied to the connector is partially borne by the wrap wire inserted into the sleeves. This increases the resistance to breakage of the connector.

For reduced weight, the central thick portion may be formed with a through hole.

Axially extending grooves may be formed in the inner surfaces of the sleeves so that when forming a vehicle tire by vulcanization, rubber flows into the grooves, thus strongly bonding the connector to the wrap wire of the bead cord. This increases the durability of the tire.

Preferably, the inner surface of each of the sleeves is partially or entirely tapered such that the inner diameter thereof decreases inwardly. With this arrangement, because the diameter of the opening of each sleeve increases, the leading and trailing ends of the wrap wire can be easily inserted into the sleeves.

Also, because the wrap wire is curled and smoothly guided by the tapered inner surfaces of the sleeves until its ends abut the thick portion, the wrap wire will never get stuck in the sleeves. Thus, the ends of the wrap wire can be easily connected together.

A bead cord formed by connecting the leading and trailing ends of the wrap wire using the above-described connector is well balanced in weight, and its wrap wire is less likely to become loose at their ends. A vehicle tire including such a bead cord embedded in its bead can maintain its performance for a long time.

Embodiments

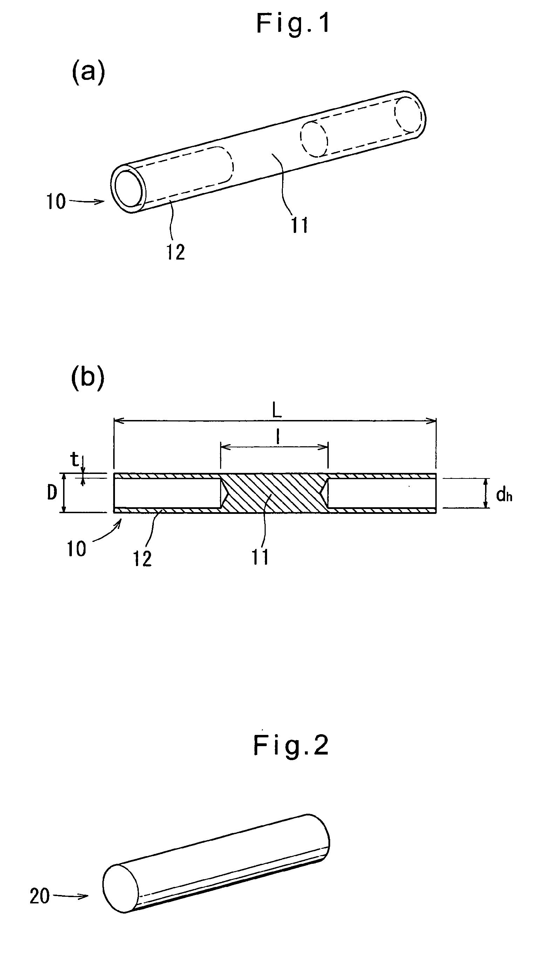

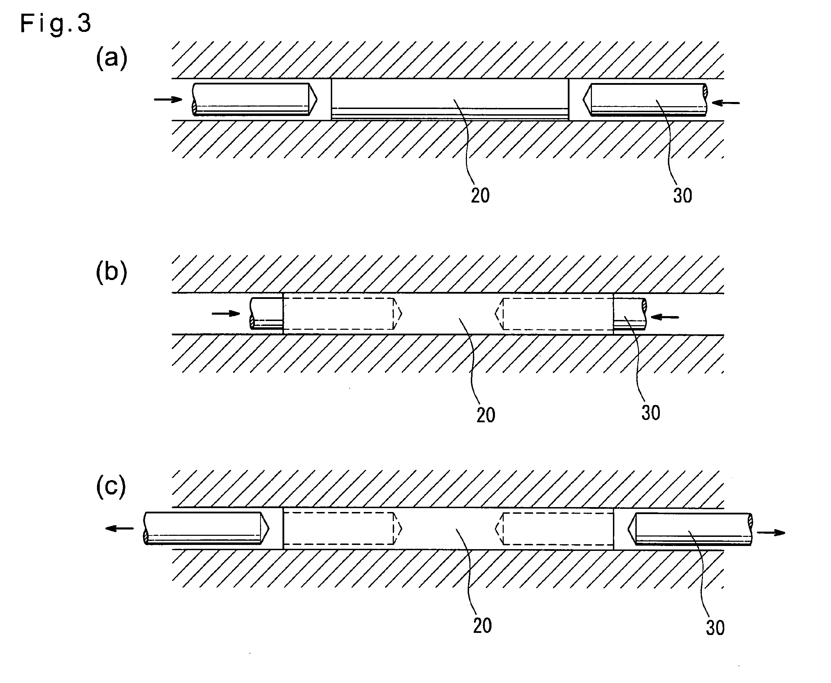

Figs. 1(a) and 1(b) show a connector 10 formed by pressing a columnar, metallic member 20 shown in Fig. 2 from both ends thereof with punches 30 having pointed tips as shown in Figs. 3(a) to 3(c) to form recessed sleeves 12 at both ends thereof which are separated from each other by a central, axially thick portion 11 as a partition. The leading and trailing ends 51 of a wrap wire 50 are adapted to be inserted into the respective sleeves 12.

Dimensions of the connector 10 of Figs. 1(a) and 1(b) are determined according to the diameter of the wrap wire as follows:

If the diameter (d) of the wrap wire is 1.5 mm, entire axial length (L) of the connector = 16 mm, axial length (1) of the thick portion 11 = 8 mm, outer diameter (D) of the connector = 2.0 mm, inner diameter (dh) of the sleeves 12 = 1.5 mm (with tolerance), and thickness (t) of the sleeves 12 = 0.25 mm.

If the diameter (d) of the wrap wire is 1.8 mm, L = 18 mm, 1=8 mm, D = 2.5 mm, dh = 1.8 mm (with tolerance) and t = 0.35 mm.

The inner diameter of the sleeves 12 may not be uniform as shown in Figs. 1(a) and 1(b).

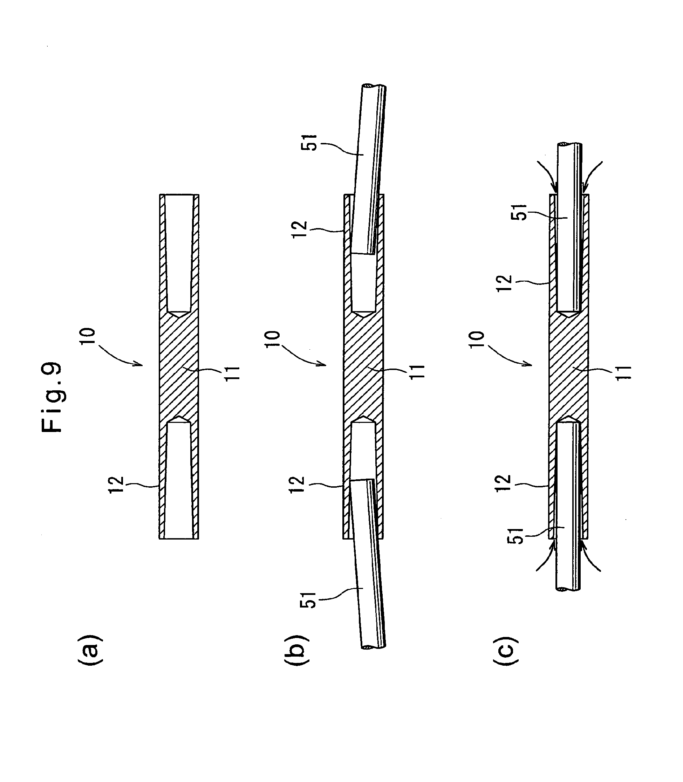

For example, as shown in Fig. 9(a), the sleeves 12 may have tapered inner surfaces.

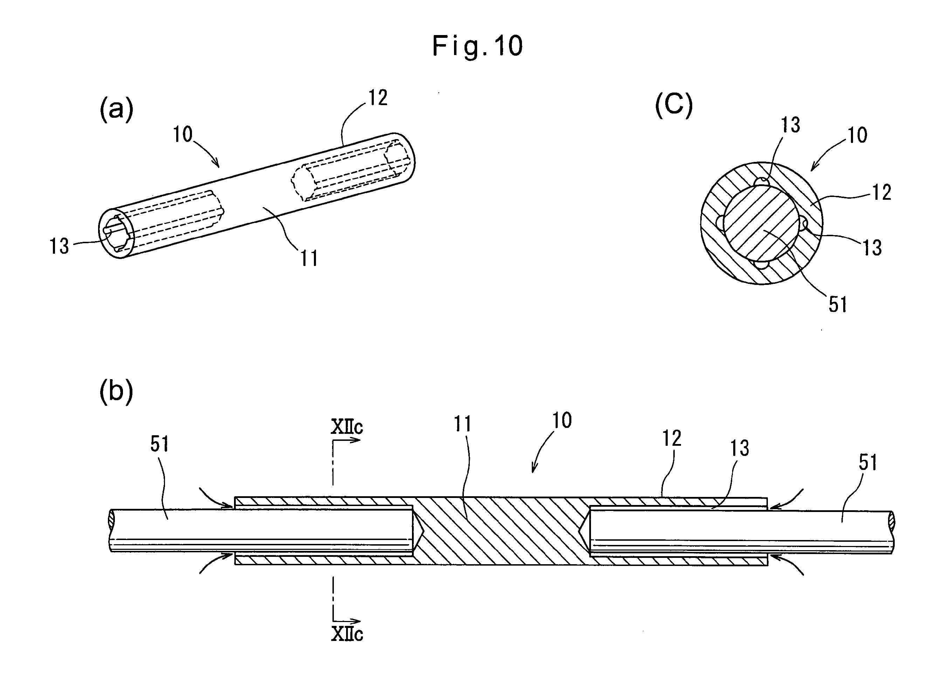

Also, as shown in Fig. 10(a), four circumferentially equidistantly spaced axial grooves 13 may be formed in the inner surface of each sleeve 12.

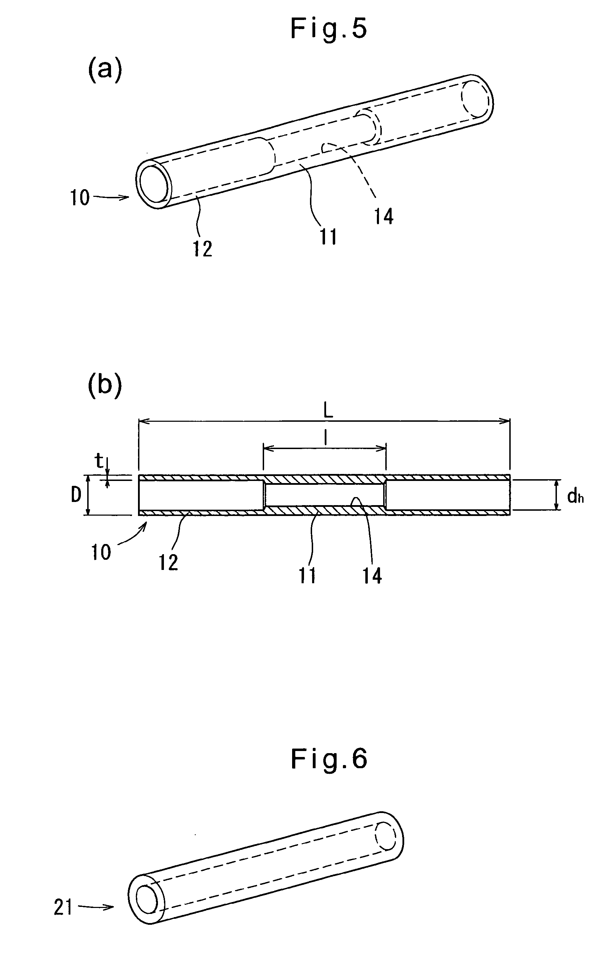

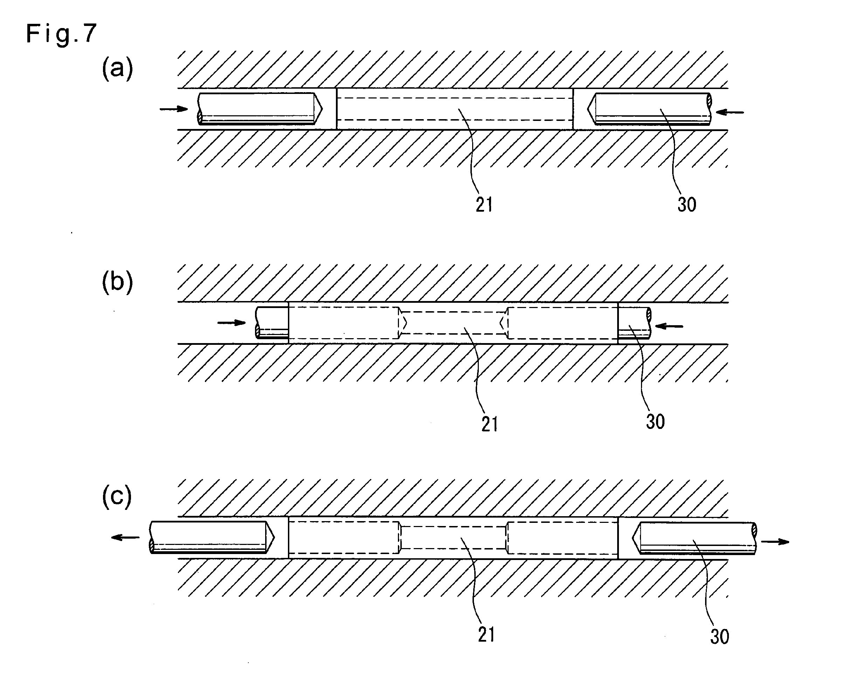

Figs. 5(a) and 5(b) show a connector 10 formed by pressing a tubular, metallic member 21 shown in Fig. 6 from both ends thereof with punches 30 having pointed tips as shown in Figs. 7(a) to 7(c) to form recessed sleeves 12 at both ends thereof which are separated from each other by a central, axially thick portion 11 as a partition having an axial through hole 14. The leading and trailing ends 51 of a wrap wire 50 are adapted to be inserted into the respective sleeves 12.

Dimensions of the connector 10 of Figs. 5(a) and 5(b) are determined according to the diameter of the wrap wire as follows:

If the diameter (d) of the wrap wire is 1.5 mm, entire axial length (L) of the connector = 18 mm, axial length (1) of the thick portion 11 = 8 mm, outer diameter (D) of the connector = 2.0 mm, inner diameter (dh) of the sleeves 12 = 1.5 mm (with tolerance), thickness (t) of the sleeves 12 = 0.25 mm, and diameter of the through hole 14 = 1.1 mm. If the diameter (d) of the wrap wire is 1.8 mm, L = 21 mm, 1 = 11 mm, D = 2.6 mm, dh = 1.8 mm (with tolerance), t = 0.40 mm, and diameter of the through hole 14 = 1.4 mm.

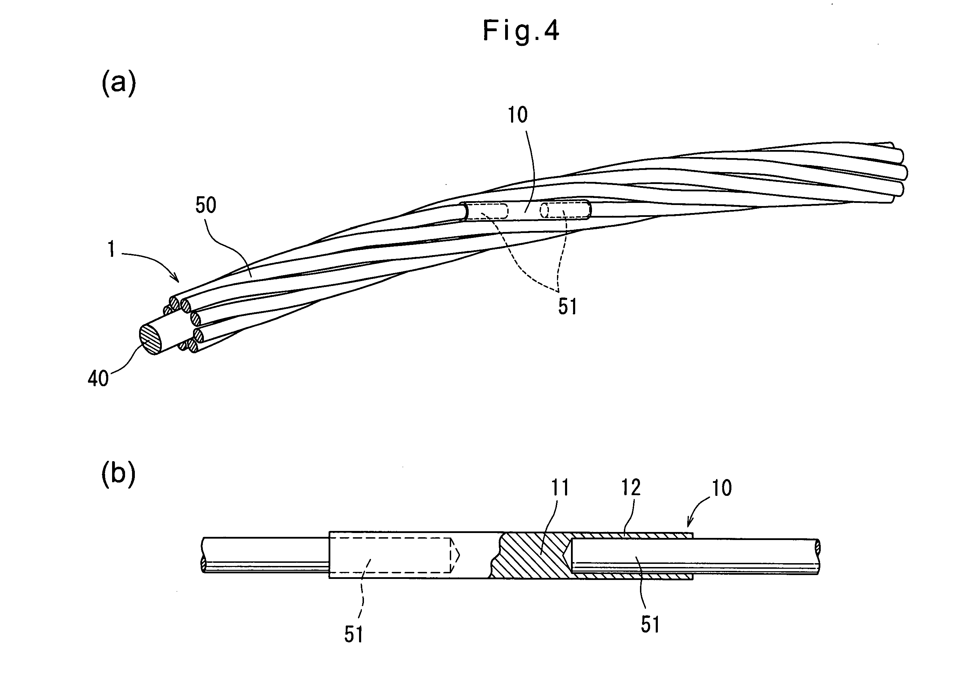

Fig. 4 shows how the leading and trailing ends 51 of a wrap wire 50 is connected together by means of the connector 10 of Figs. 1(a) and 1(b).

In order for the leading and trailing ends 51 of the wrap wire 50 to be pressed against the respective axial end walls of the thick portion 11 when the ends 51 are inserted into the respective sleeves 12, the wrap wire 50 is cut slightly longer.

Specifically, the wrap wire is cut so that when the wrap wire is wrapped around the core and cut, the distance between the leading and trailing ends of the thus cut wire is shorter than the axial length of the thick portion 11 of the connector 10 by r which satisfies the relation:

$$0 \text{ x } \pi Dc \leq r \leq 0.011 \text{ x } \pi Dc$$

where Dc is the diameter of the circle defined by the central axis of the coil forming the annular core 40, and thus nDc is the circumferential length of such a circle.

With the leading and trailing ends 51 of the wrap wire 50 pressed against the respective axial end walls of the thick portion 11 when the ends 51 are inserted into the respective sleeves 12, any bending stress applied to the connector 10 is partially borne by the wrap wire 50, so that the resistance to breakage of the connector increases.

The leading and trailing ends 51 of the wrap wire 50 can be more easily inserted into the respective sleeves 12 of the connector shown in Fig. 9(a), because the sleeves 12 of this connector have large openings.

As shown in Fig. 9(b), when the leading and trailing ends 51 are inserted into the sleeves 12, they are guided by the inner surfaces of the sleeves 12, which are tapered toward the deep ends of the sleeves 12, so as to be gradually aligned with each other.

Thus, they can smoothly abut the thick portion 11 as shown in Fig. 9(c).

When a tire is formed by vulcanization using such a bead cord 1, rubber can smoothly flow into spaces between the tapered inner surfaces of the sleeves 12 and the wrap wire 50, thus strongly bonding the wrap wire to the tire, and increasing the durability of the tire.

By forming the grooves 13 shown in Fig. 10(a), the contact resistance between the inner surfaces of the sleeves 12 and the wrap wire 50 decreases, so that the leading and trailing ends 51 of the wrap wire 50 can be smoothly inserted into the sleeves 12.

When the ends of the wrap wire are inserted into the sleeves 12, the spaces defined by the grooves 13 formed in the inner surfaces of the sleeves 12 remain hollow as shown in Figs. 10(b) and 10(c).

Thus, when a tire is formed by vulcanization using the bead cord 1, rubber flows into the grooves 13 as shown by arrows in Fig. 10(c), thereby securely joining the wrap wire 50 to the connector 10.

Since the ends 51 of the bead cord 1 are inseparably joined to the connector 10, the tire maintains its performance for a long period of time.

**Claims**

1. A connector for a wrap wire of a bead cord comprising a central thick portion 11, and sleeves 12 provided at both ends of said thick portion 11 into which leading and trailing ends 51 of said wrap wire are adapted to be inserted, respectively.

2. The connector of claim 1 wherein said sleeves 12 are formed by recessing both ends of a columnar member toward its center to define said thick portion 11 at its center as a partition.

3. The connector of claim 2 wherein said columnar member is made of a metal such as iron or brass.

4. The connector of any of claims 1 to 3 wherein the axial length (1) of said central thick portion 11 and the diameter (d) of said wrap wire satisfies the relation: diameter (d) of the wrap wire ≤ axial length (1) ≤ 8 x diameter (d) of the wrap wire.

5. The connector of any of claims 1 to 4 wherein said central thick portion 11 is formed with a through hole 14.

6. The connector of any of claims 1 to 5 wherein said sleeves define in inner surfaces thereof axially extending grooves 13 into which rubber can flow.

7. The connector of any of claims 1 to 6 wherein the inner surface of each of said sleeves is partially or entirely tapered such that the inner diameter thereof decreases inwardly.

8. A method of manufacturing a connector for a wrap wire of a bead cord, said method comprising the step of pressing a metallic columnar member 20 from both ends thereof with punches 30 to define a central thick portion 11 as a partition, and recessed sleeves 12 at both ends of said thick portion 11.

9. A method of manufacturing a connector for a wrap wire of a bead cord, said method comprising the step of pressing a metallic tubular member 21 from both ends thereof with punches 30 to define a central, tubular thick portion 11 as a stopper, and recessed sleeves 12 at both ends of said thick portion 11.

10. A bead cord including the connector of any of claims 1 to 7, wherein the leading and trailing ends 51 of said wrap wire of the bead cord are connected together through said connector.

11. A tire for a vehicle including a bead in which the bead cord of claim 10 is embedded.

12. A method of connecting leading and trailing ends of a wrap wire of a bead cord, comprising the steps of wrapping the wrap wire 50 around an annular core 40, cutting said wrap wire 50 to provide said trailing end 51 of said wrap wire 50, and inserting the leading and trailing ends 51 of the wrap wire 50 into the sleeves 12 of the connector of any of claims 1 to 7, wherein said wrap wire 50 is cut to such a length that the distance between the leading and trailing ends 51 of the wrap wire 50 is equal to or shorter than the axial length of the thick portion 11 and the difference therebetween is between 0 to 1.1% of the circumferential length of the circle defined by the annular coil, whereby the leading and trailing ends of the wrap wire abut the thick portion 11 without any gap therebetween when the leading and trailing ends of the wrap wire are inserted into the sleeves 12.

Fig.1

(a)

(b)

Fig.2

EP 1 897 704 A1

Fig.3

(a)

20    30

(b)

20    30

(c)

20    30

Fig.4

# Ｆｉｇ.5

## (a)

## (b)

# Ｆｉｇ.6

Fig.7

(a)

(b)

(c)

30

21

30

21

30

21

11

# Fig.8

(a)

(b)

Fig.9

Fig.10

## Fig. 11

100

110

1

## Fig. 12

40

51

50

60

# Fig.13

(a)

(b)

EP 1 897 704 A1

# Fig. 14

(a)

(b)

<table>
<tr><td colspan="2" align="center">**INTERNATIONAL SEARCH REPORT**</td><td>International application No.<br>PCT/JP2006/312796</td></tr>
</table>

| A. CLASSIFICATION OF SUBJECT MATTER |
| --- |
| *B60C15/04*(2006.01)i, *B21D53/36*(2006.01)i |
| According to International Patent Classification (IPC) or to both national classification and IPC |

| B. FIELDS SEARCHED |
| --- |
| Minimum documentation searched (classification system followed by classification symbols)<br>B60C15/04, B29D30/48, B21D39/20, 41/02, 53/36 |
| Documentation searched other than minimum documentation to the extent that such documents are included in the fields searched<br>    Jitsuyo Shinan Koho          1922-1996   Jitsuyo Shinan Toroku Koho   1996-2006<br>    Kokai Jitsuyo Shinan Koho    1971-2006   Toroku Jitsuyo Shinan Koho   1994-2006 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 50-122581 A  (Kobe Steel, Ltd.),<br>26 September, 1975 (26.09.75),<br>Full text<br>(Family: none) | 1-12 |
| A | JP 56-51104 B2  (Fuji Mercantile Co., Ltd.),<br>03 December, 1981 (03.12.81),<br>Full text<br>& JP 54-46279 A | 1-12 |
| A | JP 56-34444 A  (The Yokohama Rubber Co., Ltd.),<br>06 April, 1981 (06.04.81),<br>Full text<br>(Family: none) | 1-12 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    15 August, 2006 (15.08.06) | Date of mailing of the international search report<br>    22 August, 2006 (22.08.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

| | INTERNATIONAL SEARCH REPORT | International application No. |
|---|---|---|
| | | PCT/JP2006/312796 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2005-238997 A  (Fuji Seiko Co., Ltd.),<br>08 September, 2005 (08.09.05),<br>Full text<br>(Family: none) | 1-12 |

Form PCT/ISA/210 (continuation of second sheet) (April 2005)

**REFERENCES CITED IN THE DESCRIPTION**

**Patent documents cited in the description**

- JP 50122581 A

- JP 56051104 B